(19) Europäisches Patentamt
European Patent Office
Office européen des brevets

(11) Veröffentlichungsnummer: **0 199 161**
**A2**

(12) # EUROPÄISCHE PATENTANMELDUNG

(21) Anmeldenummer: **86104618.3**

(22) Anmeldetag: **04.04.86**

(51) Int. Cl.⁴: **H 04 L 9/02**

(30) Priorität: **25.04.85 DE 3514860**

(43) Veröffentlichungstag der Anmeldung:
**29.10.86 Patentblatt 86/44**

(84) Benannte Vertragsstaaten:
**AT CH LI NL**

(71) Anmelder: **ANT Nachrichtentechnik GmbH**
**Gerberstrasse 33**
**D-7150 Backnang(DE)**

(72) Erfinder: **Bitzer, Wolfgang, Dipl.-Ing.**
**Rechbergstrasse 15**
**D-7153 Weissach im Tal(DE)**

(74) Vertreter: **Schickle, Gerhard, Dipl.-Ing.**
**ANT Nachrichtentechnik GmbH Patent- und Lizenzabteilung Gerberstrasse 33**
**D-7150 Backnang(DE)**

(54) **Verfahren zur bitweise verschlüsselten Übertragung.**

(57) Die Erfindung bezieht sich auf ein Verfahren bzw. auf eine Schaltungsanordnung zur bitweisen verschlüsselten Übertragung bzw. Entschlüsselung von Nachrichten-Binär-Zeichenfolgen, wobei nach dem Prinzip der Bitstrom-Verschlüsselung gearbeitet wird und wobei ein Klarzeichen nicht benutzt und die Übertragung eines bestimmten verschlüsselten Zeichens verboten sind, und ist dadurch gekennzeichnet, daß auf der Verschlüsselungsseite die zu übertragenden verschlüsselten Zeichen auf das verbotene Zeichens untersucht werden und daß bei Erkennung dieses Zeichens als Ersatz ein Zeichen übertragen wird, das durch bitweise Verknüpfung der einzelnen erwürfelten Bits des Schlüsselgenerators mit den Bits des nicht benutzten Zeichens gebildet wird, und daß auf der Entschlüsselungsseite die entschlüsselten Zeichen auf das nicht benutzte Zeichen untersucht werden und daß bei Erkennung dieses Zeichens anstelle dieses Zeichens ein Zeichen als Klarzeichen ausgegeben wird, das durch bitweise mod-2-Verknüpfund der einzelnen erwürfelten Bits des Zeichengenerators mit den Bits des verbotenen Zeichens gebildet wird (Fig. 3a und 3b).

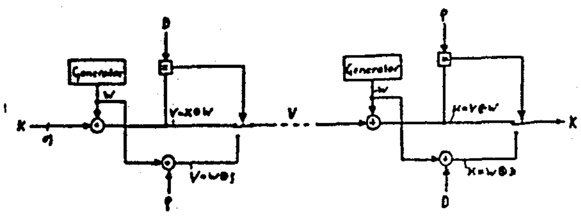


FIG 3A FIG 3B.

EP 0 199 161 A2

Verfahren zur bitweise verschlüsselten Übertragung

Die Erfindung betrifft ein Verfahren bzw. eine Schaltungsanordnung zur bitweise verschlüsselten Übertragung bzw. bitweisen Entschlüsselung von Nachrichten-Binär-Zeichenfolgen gemäß Oberbegriff der Ansprüche 1 bis 4 bzw. 5 bis 8.

Solche Verfahren und Schaltungsanordnungen zur Durchführung derselben sind bekannt.
Bei der Verschlüsselung werden die einzelnen Bits eines Klarzeichens K mit den Bits eines von einem Generator erwürfelten Geheimzeichens W mod-2 zum verschlüsselten Zeichen $V = K \oplus W$ verknüpft (mod-2-Addition, Symbol hierfür allgemein $\oplus$ ). Das verschlüsselte Zeichen wird übertragen und auf der Empfangsseite ebenfalls bitweise mod-2 verknüpft (mod-2-addiert) mit den einzelnen Bits eines vom Empfangsgenerator erwürfelten (gleichen) Geheimzeichens und als Klarzeichen $K = V \oplus W$ ausgegeben.

Auf internationalen und nationalen Übertragungsstrecken sind nur eine eingeschränkte Menge eines Zeichen-Alphabets zugelassen bzw. benutzt. Von den 32 möglichen Zeichen eines Telex 5er-Alphabets ist das Zeichen 32 nicht benutzt und das Zeichen "Wer da" (Zi/D) ist auf bestimmten Übertragungsstrecken mit verschlüsseltem Betrieb verboten.
Die Forderung, 31 verschiedene Klarzeichen mittels 31 Zeichen eines Geheim-Alphabets zu verschlüsseln, ist mit einem sogenannten Alphabet-Verschlüsselungsverfahren möglich.

Der Erfindung lag die Aufgabe zugrunde, die genannten Forderungen auch bei der Bitstrom-Verschlüsselung (Vernam-Methode) zu erfüllen. Die Lösung dieser Aufgabe erfolgt durch die kennzeichnenden Merkmale der Ansprüche.

Die Vorteile des erfindungsgemäßen Verfahrens bzw. der erfindungsgemäßen Schaltungsanordnung sind darin zu sehen, daß damit die Forderung eines nicht genutzten Klarzeichens und eines verbotenen verschlüsselten Zeichens auch bei der Bitstrom-Verschlüsselung in unaufwendiger Weise erfüllt werden.

Es folgt nun die Beschreibung der Erfindung anhand der Figuren.
Die Figuren 1 und 2 geben ein Fluß-Diagramm für das erfindungsgemäße Verschlüsselungs- bzw. Entschlüsselungsverfahren wieder.
Die Figuren 3 und 4 zeigen Schaltungsanordnungen zur Realisierung dieser Verfahren.

In Figur 1 sind die einzelnen Verfahrensschritte zur Verschlüsselung in Form eines Fluß-Diagramms aufgezeichnet. Nach einem ersten Schritt, dem Erwürfeln eines Geheimzeichens $W\mu$, folgt der Verschlüsselungsalgorithmus $V\mu = W\mu \oplus K\mu$, wobei $V\mu$ das $\mu$-te verschlüsselte Zeichen und $K\mu$ das $\mu$-te Klarzeichen ist, wobei $W\mu$ und $K\mu$ bitweise mod-2 miteinander verknüpft werden. Danach erfolgt die Abfrage, ob das so entstandene verschlüsselte Zeichen $V\mu$ gleich dem verbotenen Zeichen D ist. Im Nein-Fall erfolgt die sofortige Aussendung des verschlüsselten Zeichens $V\mu$, und die Prozedur wird wiederholt für das $\mu + 1$. Zeichen. Im Ja-Falle wird das verschlüsselte Zeichen $V\mu$ ersetzt durch ein Zeichen, das durch bitweise mod-2-Verknüpfung des erwürfelten Geheimzeichens $W\mu$ mit dem nicht benutzten Klarzeichen $\int$ entsteht. Sodann erfolgt die Aussendung dieses verschlüsselten Zeichens $V\mu$ und anschließend die Wiederholung der Prozedur für das nächste $\mu + 1$. zu verschlüsselnde Zeichen.
In Figur 2 ist das Fluß-Diagramm für das entsprechende

Entschlüsselungsverfahren gezeichnet. Nach einem ersten Verfahrensschritt, dem Erwürfeln eines Geheimzeichens Wμ, das gleich dem bei der Verschlüsselung erwürfelten Geheimzeichen ist, durch einen Bit-Generator, erfolgt der Entschlüsselungsalgorithmus Kμ = Wμ ⊕ Vμ, wobei Kμ das entschlüsselte Klarzeichen ist, das durch bitweise mod-2-Verknüpfung des erwürfelten Geheimzeichens Wμ mit dem empfangenen verschlüsselten Zeichen Vμ entsteht. Es erfolgt eine Abfrage, ob das so entstandene Klartextzeichen Kμ gleich dem nicht benutzten Klarzeichen ℘ ist. Im Nein-Falle wird das gebildete Klarzeichen Kμ ausgegeben, und die Prozedur der Verfahrensschritte wird für das nächste μ + 1. zu entschlüsselnde Zeichen wiederholt. Im Ja-Falle wird das Klarzeichen Kμ = ℘ ersetzt durch Kμ = Wμ ⊕ D, also durch bitweise mod-2-Verknüpfung des erwürfelten Zeichens Wμ mit dem verbotenen Zeichen D. Das so gebildete Klarzeichen Kμ wird anschließend ausgegeben, und die Prozedur erfolgt für das nächste zu entschlüsselnde Zeichen.

In Figur 3 ist im Teil a eine Schaltungsanordnung zur erfindungsgemäßen Verschlüsselung und im Teil b zur erfindungsgemäßen Entschlüsselung gezeichnet. Ein ankommendes Klartextzeichen K wird bitweise mod-2 verknüpft mit den einzelnen Bits eines von einem Generator erzeugten Geheimzeichens W und anschließend mittels eines Vergleichers auf das verbotene Zeichen D untersucht. Die nur einfach gezeichneten Leitungen und mod-2-Glieder (mod-2-Addierer oder auch Ausschließende-Oder-Glieder genannt) sind auf die ganze Zeichenbreite, also bei Telex-Betrieb mit dem CCITT-Alphabet Nr. 2 mit 5 Bits zu 5 Leitungen zu interpretieren. Wird Gleichheit nicht erkannt, so wird das so verschlüsselte Zeichen V auf die Übertragungsstrecke gesendet. Wird jedoch Gleichheit festgestellt, so werden mittels eines Schalters die Sendeleitungen auf die Ausgangsleitungen weiterer mod-2-Glieder umgeschaltet, deren erste Eingänge mit den einzelnen Bits des erwürfelten Zeichens W und deren zweite Eingänge mit den einzelnen Bits des nicht benutzten Klarzeichens § beaufschlagt sind. Es wird also nunmehr ein verschlüsseltes Zeichen $V\mu = W\mu \oplus \S$ gesendet. Auf der Empfangsseite (Fig. 3b) wird das empfangene verschlüsselte Zeichen V mod-2 bitweise verknüpft mit einem von einem Generator erwürfelten Geheimzeichen W. Das so entschlüsselte Klarzeichen K wird mittels eines Vergleichers auf das nicht benutzte Klarzeichen § untersucht. Bei Ungleichheit wird das entschlüsselte Zeichen als Klartextzeichen K ausgegeben. Bei Gleichheit werden Umschalter betätigt, wodurch der Klartextausgang an die Ausgänge von weiteren mod-2-Gliedern umgeschaltet wird. Deren erste Eingänge werden jeweils von den einzelnen Bits des erwürfelten Geheimzeichens Wμ und die zweiten Eingänge von den einzelnen Bits des verbotenen Zeichens D beaufschlagt.
Als Klartextzeichen K wird damit ein Zeichen ausgegeben, das dem Algorithmus $K\mu = W\mu \oplus D$ genügt. Wie in Figur 3a ist in Figur 3b der Signalweg nur für ein Bit gezeichnet, Leitungen, Generator, mod-2-Glieder, Vergleicher und Umschalter sind für die gesamte Zeichenbreite, also beispielsweise für 5 Bit, zu interpretieren.
Schaltungsmittel zur Signalabtastung und Regenerierung sind in den Figuren 3a und 3b nicht gezeichnet.
Die Schlüsselgeneratoren liefern alle Zeichen mit Ausnahme des Zeichens $\ominus = \S \oplus D$ mit gleicher Wahrscheinlichkeit, im Falle von 5-Bit-Fernschreibzeichen eine Wahrscheinlichkeit von 1/31. Das Zeichen $\ominus$ wird nicht erwürfelt.
Die Figuren 4a und 4b entsprechen den Schaltungsanordnungen der Figuren 3a und 3b. Der einzige Unterschied besteht darin, daß die zusätzlichen mod-2-Glieder, die bei Erkennung des verbotenen Zeichens D auf der Verschlüsselungsseite bzw. auf der entsprechenden Erkennung des nicht benutzten Zeichens § auf der Entschlüsselungsseite in Wirkung treten, mit anderen Eingangssignalen beaufschlagt sind. Die ersten Eingänge dieser mod-2-Glieder sind dabei nicht auf die Ausgänge der Schlüsselgeneratoren geführt, sondern mit den einzelnen Bits des Klarzeichens auf der Verschlüsselungsseite und mit den einzelnen Bits des verschlüsselten empfangenen Zeichens V auf der Entschlüsselungsseite beaufschlagt. Sowohl auf der Verschlüsselungs- als auch auf der Entschlüsselungsseite sind die zweiten Eingänge mit der mod-2-Summe aus dem verbotenen und dem nicht benutzten Zeichen $\wp \oplus D$ beaufschlagt. Diese Schaltungsanordnungen haben die gleiche Wirkung bzw. arbeiten nach demselben Algorithmus wie diejenigen nach Figur 3a und 3b.

Das erfindungsgemäße Verfahren und die Schaltungsanordnungen zur Durchführung desselben lassen sich auf 2 oder mehr verbotene, verschlüsselte Zeichen (D, E, F, ...) und jeweils zugeordneten, nicht benutzten Klarzeichen ($\wp$, $\Pi$, $\Psi$ ...) erweitern, wobei die Bedingung

$$\wp \oplus \Pi \oplus \Psi \ldots = D \oplus E \oplus F \ldots$$

einzuhalten ist, die verhindert, daß bei Erkennung eines verbotenen Zeichens, z.B. D, durch die bitweise Verknüpfung mit dem zugeordneten, nicht benutzten Klarzeichen ($\wp$) nicht ein anderes verbotenes Zeichen, z.B. E oder F, entsteht.

- - - - - - - - - -

ANT Nachrichtentechnik GmbH
Gerberstraße 33
7150 Backnang

E7/Ruf
BK 85/32

Patentansprüche

1. Verfahren zur bitweise verschlüsselten Übertragung einer Nachrichten-Binär-Zeichenfolge, die aus Zeichen eines Klar-Alphabets gebildet wird, wobei durch bitweise Verknüpfung der einzelnen Klarzeichen-Bits mit den von einem Bit-Generator erwürfelten Bits Bits entstehen, die ein verschlüsseltes Zeichen bilden, und wobei eines der Klarzeichen nicht benutzt und die Übertragung eines bestimmten verschlüsselten Zeichens verboten sind, dadurch gekennzeichent, daß die zu übertragenden, verschlüsselten Zeichen (V) vor der Übertragung auf dieses verbotene Zeichen (D) hin untersucht werden, daß bei Erkennung dieses Zeichens (D) durch bitweise mod-2-Verknüpfung der einzelnen erwürfelten Bits (W) des Bit-Generators mit den Bits des nicht benutzten Zeichens ( § ) ein Zeichen (V) gebildet wird und daß dieses so entstandene Zeichen ($V = \S \oplus W$) übertragen wird (Fig. 3a).

2. Verfahren zur bitweisen Entschlüsselung einer verschlüsselten Nachrichten-Binär-Zeichenfolge, wobei durch bitweise Verknüpfung der einzelnen Bits eines verschlüsselten Zeichens mit den von einem Bit-Generator erwürfelten Bits die einzelnen Klarzeichen-Bits gebildet werden, wobei eines der Klarzeichen nicht benutzt und die Übertragung eines bestimmten verschlüsselten Zeichens verboten sind, dadurch gekennzeichnet,
daß die Klarzeichen (K) auf das nicht benutzte Zeichen (ʃ) untersucht werden,
daß bei Erkennung dieses Zeichens (ʃ) dieses ersetzt wird durch ein Zeichen, das durch bitweise mod-2-Verknüpfung der einzelnen von dem Bit-Generator erwürfelten Bits (W) mit den Bits des verbotenen Zeichens (D) entsteht, und
daß dieses so gebildete Zeichen ($K = W \oplus D$) als entschlüsseltes Klarzeichen (K) verwendet wird (Fig. 3b).

3. Verfahren zur bitweise verschlüsselten Übertragung einer Nachrichten-Binär-Zeichenfolge, die aus Zeichen eines Klar-Alphabets gebildet wird, wobei durch bitweise Verknüpfung der einzelnen Klarzeichen-Bits mit den von einem Bit-Generator erwürfelten Bits Bits entstehen, die ein verschlüsseltes Zeichen bilden, und wobei eines der Klarzeichen nicht benutzt und die Übertragung eines bestimmten verschlüsselten Zeichens verboten sind, dadurch gekennzeichnet, daß die zu übertragenden verschlüsselten Zeichen (V) vor der Übertragung auf dieses verbotene Zeichen (D) hin untersucht werden,
daß bei Erkennung dieses Zeichens (D) durch bitweise mod-2-Verknüpfung des Klarzeichens (K) mit den Bits des nicht benutzten Zeichens (ʃ) und des verbotenen Zeichens (D) ein Zeichen gebildet wird und daß dieses so entstandene Zeichen (V = K ⊕ ℘ ⊕ D) übertragen wird (Fig. 4a).

4. Verfahren zur bitweisen Entschlüsselung einer verschlüsselten Nachrichten-Binär-Zeichenfolge, wobei durch bitweise Verknüpfung der einzelnen Bits eines verschlüsselten Zeichens mit den von einem Bit-Generator erwürfelten Bits die einzelnen Klarzeichen-Bits gebildet werden wobei eines der Klarzeichen nicht benutzt und die Übertragung eines bestimmten verschlüsselten Zeichens verboten sind, dadurch gekennzeichnet, daß die Klarzeichen (K) auf das nicht benutzte Zeichen (℘) untersucht werden, daß bei Erkennung dieses Zeichens (℘) durch bitweise mod-2-Verknüpfung der einzelnen Bits des empfangenen verschlüsselten Zeichens (V) mit den Bits des nicht benutzten Zeichens (℘) und des verbotenen Zeichens (D) ein neues Zeichen gebildet wird und
daß dieses so entstandene Zeichen (K = V ⊕ ℘ ⊕ D) als Klarzeichen verwendet wird (Fig. 4b).

5. Schaltungsanordnung zur Durchführung des Verfahrens nach Anspruch 1, mit einem Bit-Generator, dessen Ausgangs-Bitfolgen bitweise mod-2 verknüpft werden mit den Bits eines Klarzeichens und anschließend als verschlüsseltes Zeichen übertragen werden, dadurch gekennzeichnet, daß ein Vergleicher vorgesehen ist, durch den das zu übertragende verschlüsselte Zeichen (V) mit dem verbotenen Zeichen (D) verglichen wird,
daß für jede Bitleitung des verschlüsselten Zeichens ein Schalter vorgesehen ist, der bei Erkennung des verbotenen Zeichens (D) umgeschaltet wird, daß dadurch die abgehenden Bitleitungen für das zu übertragende verschlüsselte Zeichen an die Ausgänge von mod-2-Gliedern angeschaltet werden, welche die Ausgänge des Bit-Generators mit den einzelnen Bits des nicht benutzten Zeichens ( $\wp$ ) bitweise mod-2 verknüpfen (Fig. 3a).

6. Schaltungsanordnung zur Durchführung des Verfahrens nach Anspruch 2, mit einem Bit-Generator, dessen Ausgangs-Bitfolgen mittels mod-2-Gliedern bitweise mit den einzelnen Bits des verschlüsselten empfangenen Zeichens zum Klartextzeichen verknüpft werden, dadurch gekennzeichnet, daß ein Vergleicher vorgesehen ist, durch den das entschlüsselte Zeichen (K) mit dem nicht benutzten Zeichen ( $\wp$ ) verglichen wird,
daß in jeder Ausgangs-Bitleitung für das Klartextzeichen Schalter vorgeshen sind, die bei Erkennung des nicht benutzten Zeichens ( $\wp$ ) umgeschaltet werden, so daß die Ausgänge von mod-2-Gliedern jeweils auf die Bitleitungen für das abgehende Klartextzeichen angeschaltet werden, welche mod-2-Glieder an ihren ersten Eingängen jeweils die Ausgänge des Bit-Generators und an ihren zweiten Eingängen die einzelnen Bits des verbotenen Zeichens (D) beaufschlagt sind (Fig. 3b).

7. Schaltungsanordnung zur Durchführung des Verfahrens nach Anspruch 3, mit einem Bit-Generator, dessen Ausgangs-Bitfolgen bitweise mod-2 verknüpft werden mit den Bits eines Klarzeichens und anschließend als verschlüsseltes Zeichen übertragen werden, dadurch gekennzeichnet, daß ein Vergleicher vorgesehen ist, durch den das zu übertragende verschlüsselte Zeichen (V) mit dem verbotenen Zeichen (D) verglichen wird,
daß für jede Bitleitung des verschlüsselten Zeichens ein Schalter vorgesehen ist, der bei Erkennung des verbotenen Zeichens (D) umgeschaltet wird, daß dadurch die abgehenden Bitleitungen für das zu übertragende verschlüsselte Zeichen an die Ausgänge von mod-2-Gliedern angeschaltet werden, daß die mod-2-Glieder an ihren ersten Eingängen jeweils die einzelnen Bits des Klarzeichens (K) und an ihren zweiten Eingängen jeweils die einzelnen, mod-2-verknüpften Bits des nicht benutzten ($\wp$) und des verbotenen Zeichens (D) beaufschlagt sind (Figur 4a).

8. Schaltungsanordnung zur Durchführung des Verfahrens nach Anspruch 4, mit einem Bit-Generator, dessen Ausgangs-Bitfolgen bitweise mod-2 verknüpft werden mit den Bits eines Klarzeichens und anschließend als verschlüsseltes Zeichen übertragen werden, dadurch gekennzeichnet, daß ein Vergleicher vorgesehen ist, durch den das zu übertragende verschlüsselte Zeichen (V) mit dem verbotenen Zeichen (D) verglichen wird,
daß für jede Bitleitung des verschlüsselten Zeichens ein Schalter vorgesehen ist, der bei Erkennung des verbotenen Zeichens (D) umgeschaltet wird, daß dadurch die abgehenden Bitleitungen für das zu übertragende verschlüsselte Zeichen an die Ausgänge von mod-2-Gliedern angeschaltet werden, daß die mod-2-Glieder an ihren ersten Eingängen jeweils mit den Bits des empfangenen verschlüsselten Zeichens (V) und an ihren zweiten Eingängen jeweils die einzelnen, mod-2 verknüpften Bits des nicht benutzten ($\wp$) und des verbotenen Zeichens (D) beaufschlagt sind (Fig. 4b).

9. Schaltungsanordnung nach einem der Ansprüche 5 bis 8, dadurch gekennzeichnet, daß das Zeichen, das durch mod-2-Addition des nicht benutzten Klarzeichens ($\wp$) und des verbotenen verschlüsselten Zeichens (D) entsteht ($W = \wp \oplus D$), durch den Bitgenerator nicht erwürfelt wird und daß die anderen Zeichen mit gleicher Wahrscheinlichkeit durch den Bitgenerator geliefert werden.

10. Verfahren nach einem der Ansprüche 1 bis 4, wobei ein weiteres der Klarzeichen nicht benutzt und die Übertragung eines weiteren bestimmten verschlüsselten Zeichens verboten sind, dadurch gekennzeichnet,
daß die Summe aus den mod-2-addierten nicht benutzten Klarzeichen ($\varrho$, $\Uparrow$) gleich der Summe aus den mod-2-addierten verbotenen verschlüsselten Zeichen (D, E) ist ($\varrho \oplus \Uparrow = D \oplus E$), daß den einzelnen nicht benutzten Klarzeichen ($\varrho$, $\Uparrow$) jeweils eines der verbotenen verschlüsselten Zeichen (D, E) zugeordnet sind,
daß bei Erkennung des verbotenen verschlüsselten Zeichens (D, E) die bitweise mod-2-Verknüpfung mit den Bits des zugeordneten, nicht benutzten Klarzeichens ($\varrho$, $\Uparrow$) erfolgt und
daß bei Erkennung eines nicht benutzten Klarzeichens ($\varrho$, $\Uparrow$) die bitweise mod-2-Verknüpfung mit den Bits des jeweils zugeordneten, verbotenen verschlüsselten Zeichens (D, E) erfolgt.

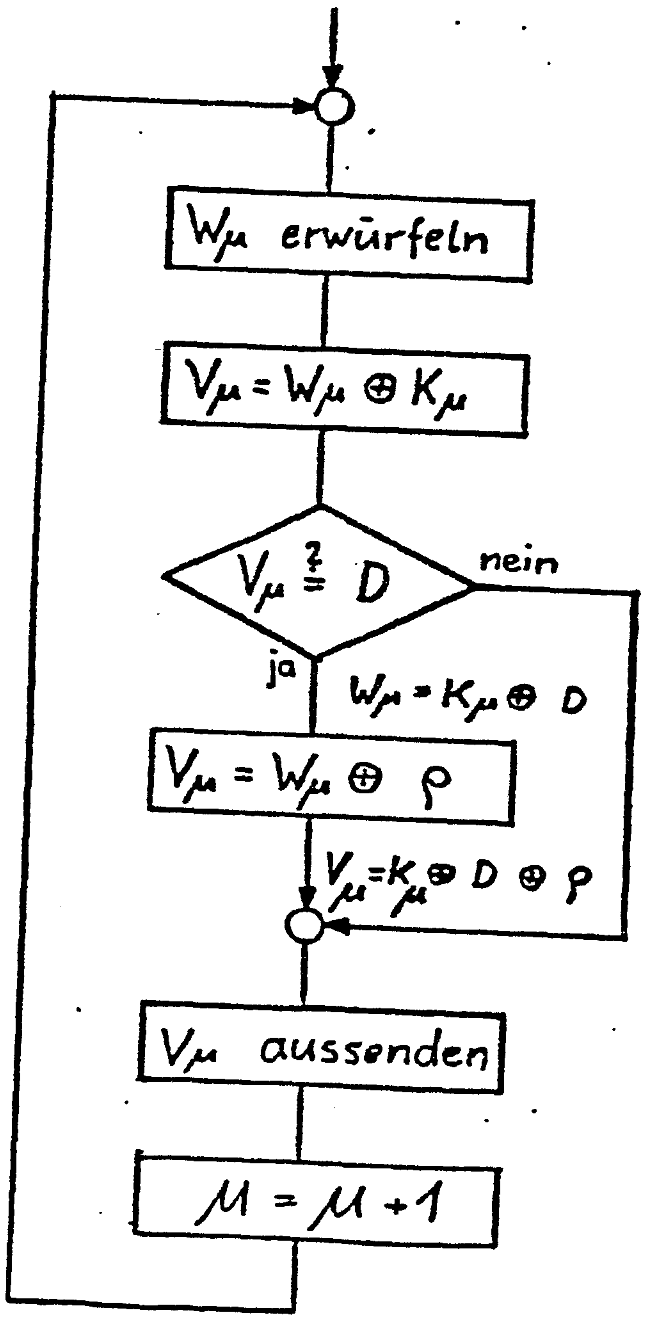
Wμ erwürfeln
Vμ = Wμ ⊕ Kμ
Vμ ≟ D
nein
ja
Wμ = Kμ ⊕ D
Vμ = Wμ ⊕ ρ
Vμ = Kμ ⊕ D ⊕ ρ
Vμ aussenden
μ = μ + 1

Fig. 1

2/4

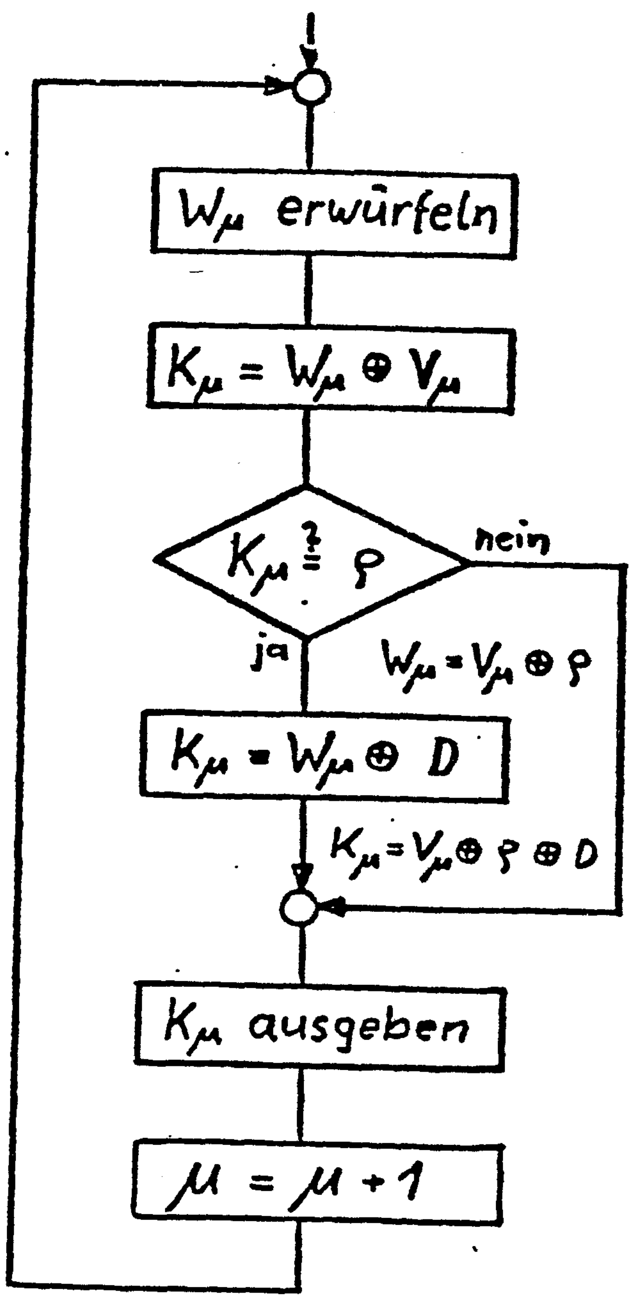


Fig. 2

8k 85/132

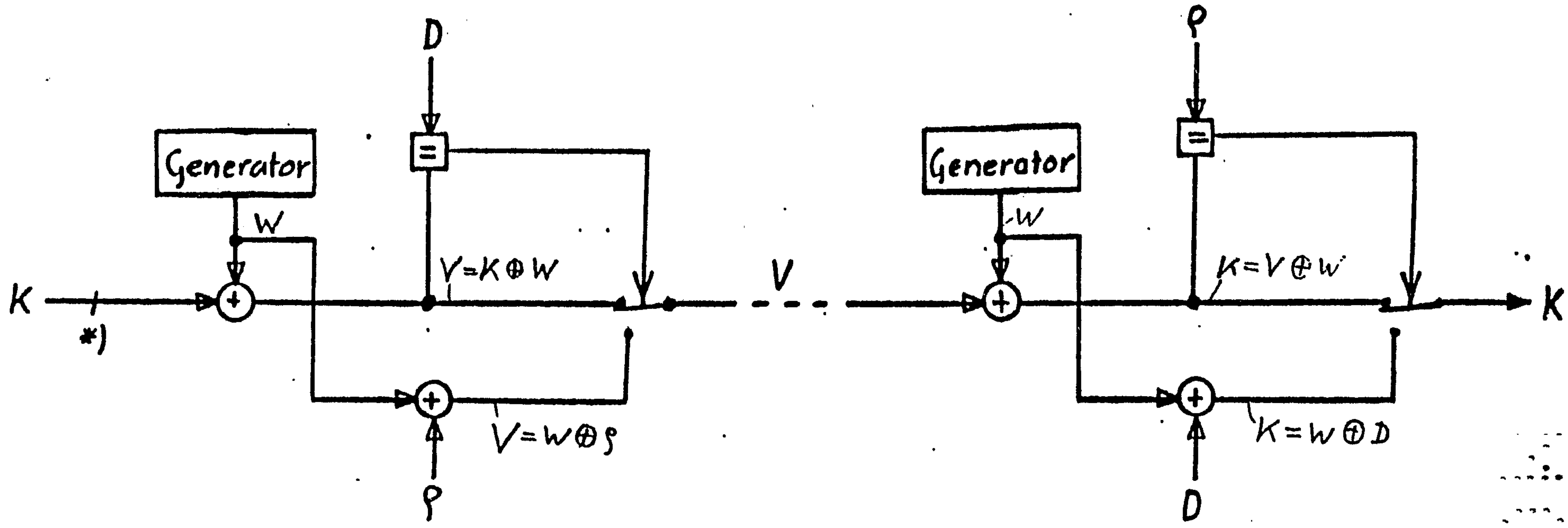


Fig. 3a

Fig. 3b

4/4

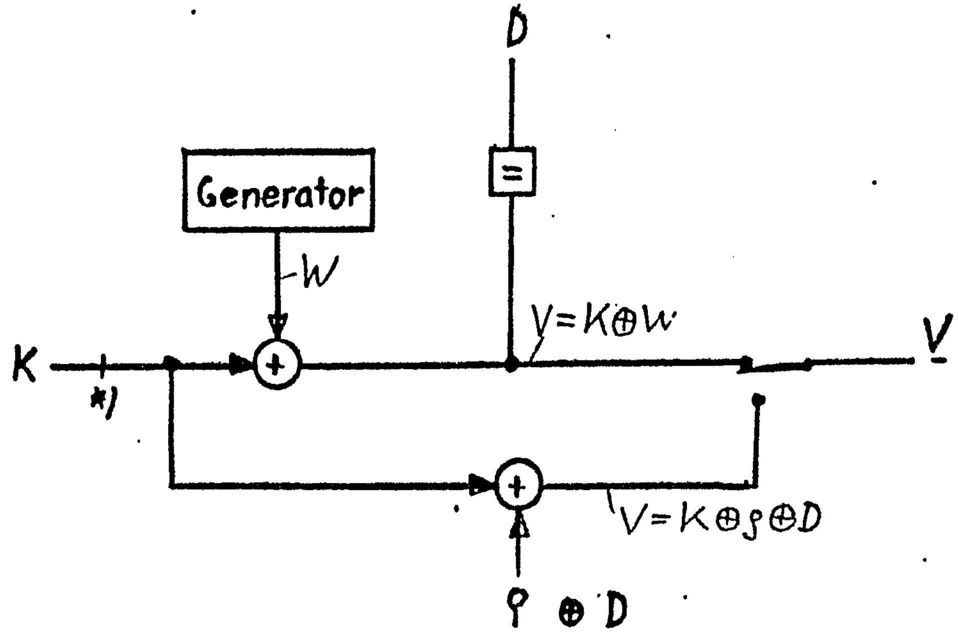


Fig. 4a

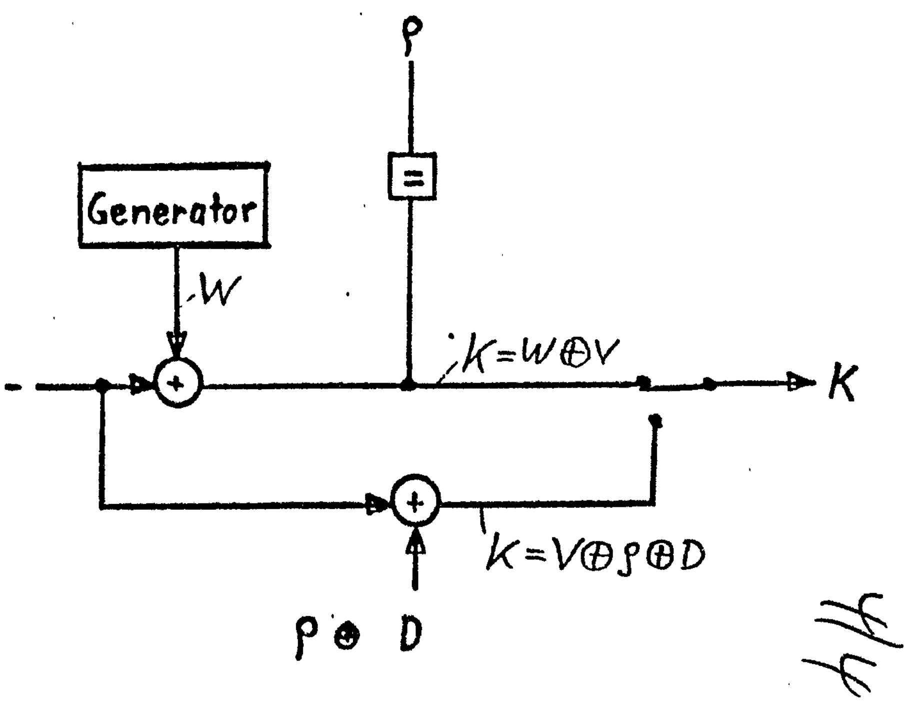


Fig. 4b

8K 85/32